(19)

Europäisches
Patentamt
European
Patent Office
Office européen
des brevets

(11) **EP 4 628 459 A1**

(12) **EUROPEAN PATENT APPLICATION**
published in accordance with Art. 153(4) EPC

(43) Date of publication:
**08.10.2025 Bulletin 2025/41**

(21) Application number: 23897702.9

(22) Date of filing: 24.11.2023

(51) International Patent Classification (IPC):
*C03C 4/08* (2006.01)     *B60J 1/00* (2006.01)
*C03C 3/078* (2006.01)    *C03C 3/087* (2006.01)
*C03B 18/02* (2006.01)

(52) Cooperative Patent Classification (CPC):
**B60J 1/00; C03C 3/078; C03C 3/087; C03C 4/08;**
C03B 18/02

(86) International application number:
**PCT/JP2023/042272**

(87) International publication number:
**WO 2024/117054 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 01.12.2022 JP 2022193022

(71) Applicant: AGC INC.
Chiyoda-ku,
Tokyo 1008405 (JP)

(72) Inventors:
• **WADA, Naoya**
  **Tokyo 100-8405 (JP)**
• **KOBAYASHI, Naoya**
  **Tokyo 100-8405 (JP)**
• **MIURA, Takenori**
  **Tokyo 100-8405 (JP)**
• **SAIJO, Yoshitaka**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS PLATE AND METHOD FOR PRODUCING GLASS PLATE**

(57)    The present invention relates to a glass plate which has two main surfaces and contains 50 ppm to 2,500 ppm of $Sb_2O_3$ in ppm by mass based on oxides; if T (%) is the transmittance in percentage of the glass plate in the plate thickness direction, U (%) is the transmittance in percentage of the glass plate in the plate thickness direction after removing surface layers of 10 $\mu$m from the two main surfaces, and $(U - T)_{380}$ is the value of $(U - T)$ at the wavelength of 380 nm, the $(U - T)_{380}$ is 1.3% or more; and the haze of the glass plate is 2.0% or less.

EP 4 628 459 A1

**Description**

TECHNICAL FIELD

The present invention relates to a glass plate and a method for producing a glass plate.

BACKGROUND ART

It is known that ultraviolet rays cause sunburn or health disorder on the human body, or cause fading or deterioration on various articles such as furniture and clothes. Therefore, there is a demand for a glass having ultraviolet ray cut performance for preventing transmission of ultraviolet rays. By using a glass having ultraviolet ray cut performance for, for example, a window glass of a building or a vehicle, it is possible to reduce the amount of ultraviolet rays taken into a room or a vehicle.

The glass having ultraviolet ray cut performance typically prevents transmission of ultraviolet rays by absorbing the ultraviolet rays. As such a glass, a glass containing an ultraviolet ray absorbing component such as Fe, Ti, or Ce as a glass component is known.

For example, Patent Literature 1 describes an ultraviolet ray/infrared ray absorbing glass which contains, in wt%, in a soda lime silica-based glass, 0.3 to 0.7 of total $Fe_2O_3$ (total iron content in terms of $Fe_2O_3$), 1.7 to 2.5 of $CeO_2$, 0.01 to 0.1 of $SO_3$ (sulfur content in terms of $SO_3$), 0 to 1 of $TiO_2$, and 0 to 1 of $MnO_2$ as coloring and color adjusting components, which is substantially free of Se, NiO, and CoO, which has a FeO/total $Fe_2O_3$ weight ratio in a range of 0.26 to 0.60, and which has an ultraviolet ray transmittance of 15% or less, a solar transmittance of 50% or less, a visible light transmittance of 70% or more, and an excitation purity of 10% or less as optical properties based on ISO 9050 measurement standards (equivalent to a glass thickness of 4 mm).

CITATION LIST

PATENT LITERATURE

Patent Literature 1: JP2002-348143A

SUMMARY OF INVENTION

TECHNICAL PROBLEM

However, a glass containing an ultraviolet ray absorbing component is likely to be colored. In particular, a glass plate containing an ultraviolet ray absorbing component is likely to have a dark color when the glass plate is viewed from an end surface, and design properties may be impaired.

In view of the above, an object of the present invention is to provide a glass plate having ultraviolet ray cut performance and having reduced coloring derived from an ultraviolet ray absorbing component when the glass plate is viewed from an end surface, and a method for producing the same.

SOLUTION TO PROBLEM

As a result of intensive studies, the inventors of the present invention have found that the above problems can be solved by a glass plate containing Sb and having ultraviolet ray cut performance locally on a surface layer of a main surface of the glass plate, and have completed the present invention.

That is, the present invention relates to the following 1 to 15.

1. A glass plate having two main surfaces, including 50 ppm to 2,500 ppm of $Sb_2O_3$ in ppm by mass in terms of oxides, in which

when a transmittance in a thickness direction of the glass plate is defined as T (%) in percentage, a transmittance in the thickness direction after removing a surface layer of 10 $\mu$m from each of the two main surfaces of the glass plate is defined as U (%) in percentage, and U-T at a wavelength of 380 nm is defined as $(U-T)_{380}$, the $(U-T)_{380}$ is 1.3% or more, and
a haze is 2.0% or less.

2. The glass plate according to the above 1, including 80 ppm to 20,000 ppm of $Fe_2O_3$ in ppm by mass in terms of oxides.

3. The glass plate according to the above 1 or 2, in which when U-T at a wavelength of 480 nm is defined as $(U\text{-}T)_{480}$, U-T at a wavelength of 580 nm is defined as $(U\text{-}T)_{580}$, and U-T at a wavelength of 680 nm is defined as $(U\text{-}T)_{680}$, the $(U\text{-}T)_{380}$, the $(U\text{-}T)_{480}$, the $(U\text{-}T)_{580}$, and the $(U\text{-}T)_{680}$ satisfy the following formula:

$$(U\text{-}T)_{380} > (U\text{-}T)_{480} > (U\text{-}T)_{580} > (U\text{-}T)_{680}.$$

4. The glass plate according to the above 1 or 2, in which, in one main surface of the two main surfaces, a maximum value of a content of $SnO_2$ from the surface to a depth of 30 $\mu$m is 0.5% or more, and

in the other main surface, a maximum value of the content of $SnO_2$ from the surface to a depth of 30 $\mu$m is 0.4% or less.

5. The glass plate according to the above 4, in which in the one main surface, a maximum value of the content of $SnO_2$ from the surface to a depth of 5 $\mu$m is larger than a maximal value of the content of $SnO_2$ at a depth of 5 $\mu$m to 30 $\mu$m.

6. The glass plate according to the above 4, having Sb-containing particles in a region from the one main surface to a depth of 10 $\mu$m, in which the Sb-containing particles have a maximum diameter of 5 nm to 100 nm.

7. The glass plate according to the above 6, in which the Sb-containing particles contain Sn.

8. The glass plate according to the above 1 or 2, having a thickness of 0.5 mm to 20 mm.

9. The glass plate according to the above 1 or 2, including, in mass% in terms of oxides, 60% to 80% of $SiO_2$, 5% to 20% of $Na_2O$, 0% to 15% of MgO, 5% to 20% of CaO, and 0% to 10% of $Al_2O_3$.

10. The glass plate according to the above 1 or 2, including 0 ppm to 10,000 ppm of $CeO_2$ in ppm by mass in terms of oxides.

11. The glass plate according to the above 1 or 2, including 0 ppm to 30,000 ppm of $TiO_2$ in ppm by mass in terms of oxides.

12. The glass plate according to the above 1 or 2, including 0.01% to 2.0% of $SO_3$ in mass% in terms of oxides.

13. The glass plate according to the above 1 or 2, in which a $\beta$-OH is 0.1 $mm^{-1}$ to 0.8 $mm^{-1}$.

14. The glass plate according to the above 1 or 2, further having a functional layer on at least one main surface of the two main surfaces.

15. The glass plate according to the above 1 or 2, which is a glass plate for building materials or a glass plate for automobiles.

ADVANTAGEOUS EFFECTS OF INVENTION

According to the present invention, it is possible to provide a glass plate having ultraviolet ray cut performance and having reduced coloring derived from an ultraviolet ray absorbing component when the glass plate is viewed from an end surface, and a method for producing the same.

BRIEF DESCRIPTION OF DRAWINGS

[FIG. 1] FIG. 1 is a diagram showing an example of a change in content of $SnO_2$ from a surface to a depth of 30 $\mu$m with the depth from the surface in a bottom surface as a horizontal axis.
[FIG. 2] FIG. 2 is a diagram showing an example of an SEM observation image of particles.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

(Glass Plate)

A glass plate according to an embodiment of the present invention (hereinafter, also referred to as the present glass plate) is a glass plate having two main surfaces and containing 50 ppm to 2,500 ppm of $Sb_2O_3$ in ppm by mass in terms of oxides, in which when a transmittance in a thickness direction of the glass plate is defined as T (%) in percentage, a transmittance in the thickness direction after removing a surface layer of 10 $\mu$m from each of the two main surfaces of the glass plate is defined as U (%) in percentage, and U-T at a wavelength of 380 nm is defined as $(U\text{-}T)_{380}$, the $(U\text{-}T)_{380}$ is 1.3%

or more, and a haze is 2.0% or less.

The inventors of the present invention have found that, in a glass plate containing an Sb element as a glass raw material and produced under a reducing atmosphere, particles containing Sb (hereinafter, also referred to as Sb-containing particles) are locally contained in a surface layer of the obtained glass plate, and the Sb-containing particles have ultraviolet ray absorbing ability. The Sb-containing particles are considered to be metal particles containing Sb reduced under a reducing atmosphere. Then, the inventors of the present invention have found that, when the Sb-containing particles are appropriately contained in the surface layer of the glass plate, a glass plate having ultraviolet ray cut performance, having reduced coloring derived from an ultraviolet ray absorbing component when the glass plate is viewed from an end surface, and having an excellent quality can be obtained, and have completed the present invention.

As described above, in a glass plate containing an ultraviolet ray absorbing component such as Fe, Ti, or Ce, the ultraviolet ray absorbing component is likely to cause coloring in a visible light region. In particular, even in the case where coloring is prevented when the glass plate is viewed from a main surface side, when the glass plate is viewed from an end surface side, a length of the glass plate in a direction parallel to a line of sight is larger than a thickness of the glass plate, and thus the color is likely to appear dark.

In contrast, according to the present invention, since the Sb-containing particles having ultraviolet ray absorbing ability are present in the vicinity of the surface of the glass plate and the surface layer of the main surface of the glass plate locally has ultraviolet ray cut performance, a glass plate having ultraviolet ray cut performance can be obtained even when the amount of the ultraviolet ray absorbing component inside in the thickness direction is small. Accordingly, the present glass plate has ultraviolet ray cut performance, has prevented coloring derived from the ultraviolet ray absorbing component when viewed from an end surface, and has excellent design properties. In addition, it is preferable to reduce the amount of the ultraviolet ray absorbing component from the viewpoint of reducing a raw material cost and from the viewpoint of improving homogeneity of the glass plate. Note that, the Sb-containing particles may be referred to as a Sb-containing colloid.

That is, the present glass plate contains 50 ppm to 2,500 ppm of $Sb_2O_3$ in ppm by mass in terms of oxides. The content of $Sb_2O_3$ is 50 ppm or more, preferably 200 ppm or more, more preferably 300 ppm or more, and still more preferably 400 ppm or more, from the viewpoint of obtaining suitable ultraviolet ray cut performance in the surface layer of the glass plate. On the other hand, the content of $Sb_2O_3$ is 2,500 ppm or less, preferably 2,000 ppm or less, more preferably 1,600 ppm or less, and still more preferably 1,300 ppm or less, from the viewpoint of improving transparency.

Note that, the content of $Sb_2O_3$ in the present glass plate means an average content of Sb (including $Sb^{5+}$, $Sb^{3+}$, and Sb metal) in the entire glass plate converted to $Sb_2O_3$ basis. In the present glass plate, there is a possibility that a distribution of Sb is biased due to the generation of the Sb-containing particles in a range of a depth of about several tens of $\mu m$ from the surface layer, but it is considered that the average content of Sb can be evaluated by performing measurement in a range of a depth of 100 $\mu m$ or more from the surface. Therefore, in the present description, the content of $Sb_2O_3$ (content of Sb based on $Sb_2O_3$) is evaluated by measuring the content of Sb based on $Sb_2O_3$ inside the glass after removing a surface layer of 100 $\mu m$ from each of the two main surfaces of the glass plate by grinding.

In the present glass plate, when a transmittance in a thickness direction of the glass plate is defined as T (%) in percentage, a transmittance in the thickness direction after removing a surface layer of 10 $\mu m$ from each of the two main surfaces of the glass plate is defined as U (%) in percentage, and U-T at a wavelength of 380 nm is defined as $(U-T)_{380}$, the $(U-T)_{380}$ is 1.3% or more, as measured in accordance with JIS R 3106:2019. It can be determined that the smaller the transmittance at a wavelength of 380 nm, the more the transmission of ultraviolet rays through the glass plate is prevented, or the more the ultraviolet rays are absorbed by the glass plate. A large difference between the values of T and U means a large difference in transmissibility at a measurement wavelength between a portion from the surface of the glass plate to a depth of 10 $\mu m$ and a portion deeper than that portion. Therefore, in the glass plate containing a predetermined amount of $Sb_2O_3$, when the $(U-T)_{380}$ is 1.3% or more, it can be found that a portion within 10 $\mu m$ from the surface of at least one main surface of the glass plate locally has ultraviolet ray cut performance. Note that, the removal of the surface layer of 10 $\mu m$ from each of the two main surfaces of the glass plate is performed by etching. The etching is performed by immersing the glass plate in a 1 wt% hydrofluoric acid solution at 25°C and allowing the glass plate to stand, and an etching thickness is calculated based on a weight reduction.

The $(U-T)_{380}$ is 1.3% or more, preferably 1.8% or more, more preferably 2.5% or more, and still more preferably 3.5% or more, from the viewpoint of making the ultraviolet ray cut performance sufficient. On the other hand, the $(U-T)_{380}$ is preferably 40% or less, more preferably 25% or less, and still more preferably 10% or less, from the viewpoint of preventing coloring in the visible light region. The T and the U of the glass plate can be measured by a method described in Examples to be described later.

The present glass plate has a haze of 2.0% or less. In the present glass plate, in the case where the amount of the Sb-containing particles is excessive or a particle diameter thereof is too large, the haze may be increased, the glass plate may be clouded, and the transparency or the quality of the glass plate may be remarkably impaired. On the other hand, when the haze is 2.0% or less, the amount and the particle diameter of the Sb-containing particles are appropriate, and thus the glass plate has excellent transparency and quality.

That is, the haze of the glass plate, as measured under a D65 light source in accordance with JIS K 7136:2000, is 2.0% or less, preferably 1.5% or less, more preferably 1.0% or less, and still more preferably 0.5% or less, from the viewpoint of improving the quality of the glass plate. On the other hand, the haze of the glass plate is preferably as small as possible. The lower limit is not particularly limited, and may be, for example, 0.01% or more. The haze of the glass plate can be measured by a method described in Examples to be described later.

In the present glass plate, when U-T at a wavelength of 480 nm is defined as $(U-T)_{480}$, U-T at a wavelength of 580 nm is defined as $(U-T)_{580}$, and U-T at a wavelength of 680 nm is defined as $(U-T)_{680}$, the $(U-T)_{380}$, the $(U-T)_{480}$, the $(U-T)_{580}$, and the $(U-T)_{680}$ preferably satisfy the following formula.

$$(U-T)_{380} > (U-T)_{480} > (U-T)_{580} > (U-T)_{680}$$

The Sb-containing particles have absorption in an ultraviolet region, and have smaller absorption as the wavelength is longer in the visible light region having a wavelength longer than that of the ultraviolet region. In the wavelength region where the absorption by the Sb-containing particles is small, a difference in transmittance between the surface layer and the inside of the glass plate is also relatively small. Therefore, in the present glass plate in which the Sb-containing particles are appropriately contained, the above relational formula is easily satisfied.

In the present glass plate, a maximum value $(U-T)_{UV}$ of the U-T in a region of UV-A light, that is, at a wavelength of 315 nm to 400 nm is preferably 2.0% or more. The $(U-T)_{UV}$ being 2.0% or more means that a portion that is 10 $\mu$m from the surface layer of the glass plate has relatively large absorption within a wavelength range of 315 nm to 400 nm as compared with that of the inside of the glass plate. That is, when the $(U-T)_{UV}$ is 2.0% or more, it can be found that the portion within 10 $\mu$m from the surface of at least one main surface of the glass plate locally has ultraviolet ray cut performance.

The $(U-T)_{UV}$ is preferably 2.0% or more, more preferably 2.5% or more, and still more preferably 4.0% or more, from the viewpoint of making the ultraviolet ray cut performance sufficient. On the other hand, the $(U-T)_{UV}$ is preferably 50% or less, more preferably 30% or less, and still more preferably 15% or less, from the viewpoint of preventing coloring in the visible light region. The maximum value of the U-T at a wavelength of 315 nm to 400 nm is determined by a method described in Examples to be described later.

A smaller T ($T_{380}$) at a wavelength of 380 nm means more excellent ultraviolet ray cut performance of the glass plate. Therefore, the $T_{380}$ is preferably 80% or less, more preferably 78% or less, and still more preferably 76% or less, from the viewpoint of making the ultraviolet ray cut performance sufficient. On the other hand, the $T_{380}$ is preferably 2% or more, more preferably 30% or more, and still more preferably 70% or more, from the viewpoint of preventing coloring in the visible light region.

A smaller T ($T_{UV}$) at a wavelength at which the U-T is maximum at a wavelength of 315 nm to 400 nm means more excellent ultraviolet ray cut performance of the glass plate. Therefore, the $T_{UV}$ is preferably 80% or less, more preferably 78% or less, and still more preferably 76% or less, from the viewpoint of making the ultraviolet ray cut performance sufficient. On the other hand, the $T_{UV}$ is preferably 5% or more, more preferably 50% or more, and still more preferably 65% or more, from the viewpoint of preventing coloring in the visible light region.

As described above, the transmittance at a wavelength of 315 nm to 400 nm mainly contributes to the ultraviolet ray cut performance. Therefore, T ($T_{480}$) at a wavelength of 480 nm is not particularly limited, and may be adjusted according to desired properties other than the ultraviolet ray cut performance. The $T_{480}$ may be, for example, 10% or more, 60% or more, or 80% or more. On the other hand, the $T_{480}$ may be, for example, 98% or less, or 95% or less.

Similarly, a T at a wavelength of 580 nm ($T_{580}$) is not particularly limited, and may be adjusted according to desired properties other than the ultraviolet ray cut performance. In this case, the $T_{580}$ may be, for example, 15% or more, 60% or more, or 80% or more. On the other hand, the $T_{580}$ may be, for example, 97% or less, or 95% or less.

Similarly, T ($T_{680}$) at a wavelength of 680 nm is not particularly limited, and may be adjusted according to desired properties other than the ultraviolet ray cut performance. The $T_{680}$ may be, for example, 15% or more, 60% or more, or 75% or more. On the other hand, the $T_{680}$ may be, for example, 97% or less, or 95% or less.

In the present glass plate, in one main surface of the two main surfaces, a maximum value of a content of $SnO_2$ from the surface to a depth of 30 $\mu$m is preferably 0.5% or more, and in the other main surface, a maximum value of the content of $SnO_2$ from the surface to a depth of 30 $\mu$m is preferably 0.4% or less.

The content of $SnO_2$ in a depth direction from the surface is measured by the following method.

(Method)

A distribution of a concentration of Sn (including $Sn^{4+}$, $Sn^{2+}$, and Sn metal) in terms of $SnO_2$ from a measurement target surface to a depth of 30 $\mu$m in a cross section processed to be perpendicular to the main surface is measured by a wavelength dispersive X-ray detector (WDX) mounted on an electron probe microanalyzer (EPMA). At this time, an acceleration voltage is set to 15 kV, a sample current is set to $2.5 \times 10^{-7}$ A, a scan speed is set to 6 $\mu$m/min, a beam aperture is set to 1 $\mu$m, and a step interval is set to 1 $\mu$m. In addition, as a standard sample, a standard glass sample to which quantitative values of all elements contained in the sample are given may be used, or a standard sample to which quantitative values other than the glass such as an oxide are given may be used.

As to be described in detail later, the present glass plate is preferably produced by using a float method, and a molten metal used in the float method is preferably made of molten tin. In the glass plate obtained by the float method using such a molten metal made of molten tin, a concentration (content) of tin in the surface layer of the main surface (bottom surface) of the glass plate in contact with the molten metal is relatively large. On the other hand, in the surface layer of the main surface (top surface) of the glass plate not in contact with the molten metal, the concentration (content) of tin is relatively small. That is, a glass plate in which the content of $SnO_2$ of each main surface is within the above range in terms of oxides can be determined as a glass plate obtained by the float method using molten tin. In this case, the one main surface, that is, the main surface having a maximum value of the content of $SnO_2$ of 0.5% or more from the surface to a depth of 30 $\mu$m is the bottom surface, and the other main surface, that is, the main surface having a maximum value of 0.4% or less from the surface to a depth of 30 $\mu$m is the top surface.

In the bottom surface, the maximum value of the content of $SnO_2$ from the surface to a depth of 30 $\mu$m is preferably 0.5% or more, more preferably 0.7% or more, and still more preferably 0.9% or more. Further, in the bottom surface, the maximum value of the content of $SnO_2$ is preferably 3.0% or less, and more preferably 2.0% or less. In the top surface, the maximum value of the content of $SnO_2$ is preferably 0.4% or less, more preferably 0.2% or less, and still more preferably 0.1% or less.

In the bottom surface, a maximum value of the content of $SnO_2$ from the surface to a depth of 5 $\mu$m is preferably larger than a maximal value of the content of $SnO_2$ at a depth of 5 $\mu$m to 30 $\mu$m. Accordingly, a glass plate in which the particle diameter of the Sb-containing particles is relatively small and the haze value is relatively small is obtained.

In the bottom surface, the content of $SnO_2$ from the surface to a depth of 5 $\mu$m and the content of $SnO_2$ at a depth of 5 $\mu$m to 30 $\mu$m are measured by using the following method.

(Method)

A distribution of each of concentrations of Sn (including $Sn^{4+}$, $Sn^{2+}$, and Sn metal) in terms of $SnO_2$ from a measurement target surface to a depth of 5 $\mu$m and at a depth of 5 $\mu$m to 30 $\mu$m in a cross section processed to be perpendicular to the main surface is measured by a wavelength dispersive X-ray detector (WDX) mounted on an electron probe microanalyzer (EPMA). At this time, an acceleration voltage is set to 15 kV, a sample current is set to $2.5 \times 10^{-7}$ A, a scan speed is set to 6 $\mu$m/min, a beam aperture is set to 1 $\mu$m, and a step interval is set to 1 $\mu$m. In addition, as a standard sample, a standard glass sample to which quantitative values of all elements contained in the sample are given may be used, or a standard sample to which quantitative values other than the glass such as an oxide are given may be used.

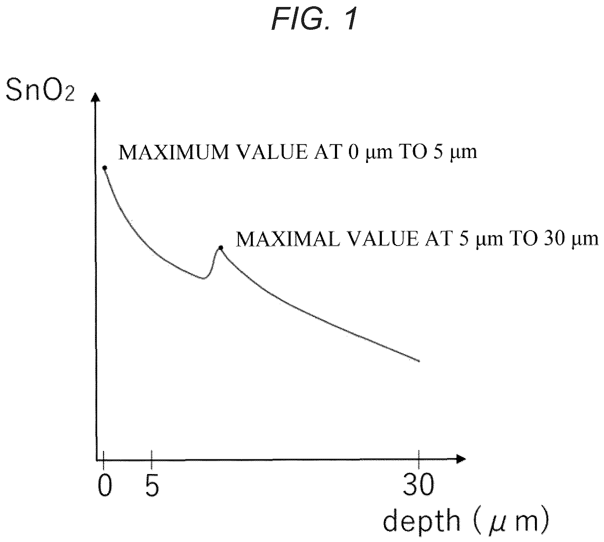

In the bottom surface, the maximum value of the content of $SnO_2$ from the surface to a depth of 5 $\mu$m is more preferably larger than 1.1 times, and still more preferably larger than 1.2 times the maximal value of the content of $SnO_2$ at a depth of 5 $\mu$m to 30 $\mu$m. FIG. 1 is a diagram showing an example of a change in content of $SnO_2$ from the surface to a depth of 30 $\mu$m with the depth from the surface in the bottom surface as a horizontal axis. FIG. 1 shows positions of "the maximum value of the content of $SnO_2$ from the surface to a depth of 5 $\mu$m" and "the maximal value of the content of $SnO_2$ at a depth of 5 $\mu$m to 30 $\mu$m" in FIG. 1.

The maximum value of the content of $SnO_2$ from the surface to a depth of 5 $\mu$m and the maximal value of the content of $SnO_2$ at a depth of 5 $\mu$m to 30 $\mu$m can be adjusted by a concentration of $H_2$ in an atmosphere in a molten metal bath. The concentration of $H_2$ is preferably 0.5 vol% to 15 vol%.

In the present glass plate, at least one main surface of the two main surfaces preferably contains Sb-containing particles in a region up to a depth of 10 $\mu$m from the surface. That is, in the present glass plate, it is preferable that one main surface of the two main surfaces contains Sb-containing particles in a region up to a depth of 10 $\mu$m from the surface, or both main surfaces of the two main surfaces contain Sb-containing particles in a region up to a depth of 10 $\mu$m from the surface. Accordingly, the ultraviolet ray cut performance can be selectively imparted to the surface layer of the main surface of the present glass plate. Note that, the region up to a depth of 10 $\mu$m from the surface means a region having a depth of 0 $\mu$m to 10 $\mu$m from the surface, and includes the case of a depth of 10 $\mu$m.

In addition, in the present glass plate, in both surfaces of the two main surfaces, it is preferable that the Sb-containing particles are not contained in a region having a depth of 30 $\mu$m or more from the surface, it is more preferable that the Sb-containing particles are not contained in a region having a depth of 20 $\mu$m or more from the surface, and it is still more preferable that the Sb-containing particles are not contained in a region having a depth of more than 10 $\mu$m from the surface. Accordingly, it is possible to more suitably prevent coloring derived from the ultraviolet ray absorbing component when the present glass plate is viewed from an end surface.

In the one main surface, a maximum diameter of the Sb-containing particles observed in the region up to a depth of 10 $\mu$m from the surface is preferably 5 nm to 100 nm. The maximum diameter of the Sb-containing particles is preferably 5 nm or more, more preferably 10 nm or more, and still more preferably 15 nm or more, from the viewpoint of making the ultraviolet ray cut performance sufficient. On the other hand, the maximum diameter of the Sb-containing particles is preferably 100 nm or less, more preferably 80 nm or less, and still more preferably 70 nm or less, from the viewpoint of preventing an increase in haze. The presence or absence and the diameter of the Sb-containing particles can be checked by using a method described in Examples to be described later.

The maximum diameter of the Sb-containing particles can be adjusted by a molding temperature and a molding time of a molten glass, the content of $Sb_2O_3$, and the like. A glass base material temperature when the molten glass starts to come into contact with the molten metal, that is, a molding start temperature is preferably 900°C to 1,250°C, and a glass base material temperature when the molten glass is separated from the molten metal, that is, a molding end temperature is preferably 500°C to 750°C. The time during which the molten glass is in contact with the molten metal, that is, the molding time is preferably 3 minutes to 20 minutes.

Note that, the presence or absence and the diameter of the Sb-containing particles can be checked by observing a cross section processed to be perpendicular to the main surface using a scanning electron microscope (SEM) or a transmission electron microscope (TEM). In the case where the size of the Sb-containing particles is small, for example, in the case where the diameter is 30 nm or less, the Sb-containing particles may not be detected by observation using a scanning electron microscope (SEM). On the other hand, using a transmission electron microscope (TEM), the Sb-containing particles can be detected even in the case where the size of the Sb-containing particles is relatively small. In addition, whether various elements such as Sb and Sn are contained in the particles can be checked by performing composition analysis by SEM-EDX or TEM-EDX. Note that, in the case of observing the region up to a depth of 10 $\mu$m from the surface of the main surface, as an observation range, it is sufficient to observe any region having 15 $\mu$m in a direction parallel to the main surface and having a depth of 0 $\mu$m to 10 $\mu$m in a cross section perpendicular to the main surface. In the case of observing a region having a depth of more than 10 $\mu$m from the surface of the main surface, the depth is appropriately changed for observation.

In the case of obtaining the present glass plate by using the float method, in the main surface (bottom surface) of the glass plate in contact with the molten tin, the maximum diameter of the Sb-containing particles contained in the region up to a depth of 10 $\mu$m from the surface is preferably 5 nm to 100 nm. In the case of obtaining the present glass plate by using the float method, the surface layer of both the bottom surface and the top surface may contain the Sb-containing particles, but the number and the diameter of the Sb-containing particles in the bottom surface tend to be larger. Therefore, by containing the Sb-containing particles having an appropriate diameter in the bottom surface, it is possible to appropriately achieve all of a reduction in haze, an ultraviolet ray cut effect, and prevention of coloring of the end surface. That is, the maximum diameter of the Sb-containing particles contained in the above region is preferably 5 nm or more, more preferably 10 nm or more, and still more preferably 15 nm or more, from the viewpoint of making the ultraviolet ray cut performance sufficient. On the other hand, the maximum diameter of the Sb-containing particles contained in the above region is preferably 100 nm or less, more preferably 80 nm or less, and still more preferably 70 nm or less, from the viewpoint of preventing an increase in haze.

In the case of obtaining the present glass plate by using the float method, the Sb-containing particles contained in the region up to a depth of 10 $\mu$m from the surface of the main surface (bottom surface) of the glass plate in contact with the molten tin may contain Sn. As described above, the concentration of Sn tends to be relatively large in the surface layer of the bottom surface, and the Sb-containing particles may also contain Sn. In this case, the Sb-containing particles may be alloy particles of Sb and Sn. It is preferable that the Sb-containing particles contain Sn in order to improve the ultraviolet ray cut effect of the particles.

The present glass plate preferably contains 80 ppm of 20,000 ppm of Fe in terms of $Fe_2O_3$ in ppm by mass. $Fe_2O_3$ is a component having ultraviolet ray absorbing ability. When the present glass plate contains 80 ppm of 20,000 of $Fe_2O_3$, the ultraviolet ray cut performance may be more suitably adjusted. Since the present glass plate has ultraviolet ray cut performance locally in the surface layer of the main surface, the content of $Fe_2O_3$ can be reduced as compared with the case of obtaining desired ultraviolet ray cut performance by containing only $Fe_2O_3$, and coloring derived from the ultraviolet ray absorbing component when the present glass plate is viewed from the end surface can be prevented. In addition, $Fe_2O_3$ promotes generation of the Sb-containing particles in the region up to a depth of 10 $\mu$m from the surface of the glass plate. The content of $Fe_2O_3$ is preferably 80 ppm or more, more preferably 200 ppm or more, still more preferably 500 ppm or more, and particularly preferably 700 ppm or more, in order to promote the generation of the Sb-containing particles and improve the ultraviolet ray cut performance. The content of $Fe_2O_3$ is preferably 20,000 ppm or less, more preferably 10,000 ppm or less, still more preferably 5,000 ppm or less, and particularly preferably 1,000 ppm or less in order to prevent coloring derived from the ultraviolet ray absorbing component when the present glass plate is viewed from the end surface, to prevent an increase in haze due to coarsening of the Sb-containing particles, and to further improve optical homogeneity of the glass plate.

The present glass plate preferably contains 0 ppm to 50 ppm of NiO in ppm by mass in terms of oxides. The content of NiO is preferably 50 ppm or less, more preferably 10 ppm or less, and still more preferably 5 ppm or less, from the viewpoint of preventing coloring when the present glass plate is viewed from the end surface. The content of NiO in the present glass plate may be, for example, 0.1 ppm or more.

The present glass plate preferably contains 0 ppm to 10,000 ppm of $CeO_2$ in ppm by mass in terms of oxides. The content of $CeO_2$ is preferably 10,000 ppm or less, more preferably 5,000 ppm or less, still more preferably 500 ppm or less, and particularly preferably 10 ppm or less, from the viewpoint of preventing solarization of the glass, from the viewpoint of reducing the raw material cost, and from the viewpoint of improving the optical homogeneity of the glass plate. The present glass plate may be substantially free of $CeO_2$. Note that, the expression "be substantially free of" means that the content is, for example, less than 0.1 ppm. $CeO_2$ may be contained to obtain the ultraviolet ray cut performance, and in the case where $CeO_2$ is contained, the content of $CeO_2$ may be 1 ppm or more.

The present glass plate preferably contains 0 ppm to 30,000 ppm of $TiO_2$ in ppm by mass in terms of oxides. The content of $TiO_2$ is preferably 30,000 ppm or less, more preferably 10,000 ppm or less, still more preferably 500 ppm or less, and particularly preferably 100 ppm or less, from the viewpoint of preventing the devitrification of the glass and from the viewpoint of improving the optical homogeneity of the glass plate. $TiO_2$ may be contained to obtain the ultraviolet ray cut performance, and in the case where $TiO_2$ is contained, the content of $TiO_2$ may be 1 ppm or more.

In the present glass plate, $Sb_2O_3/(Fe_2O_3+CeO_2+TiO_2)$ is preferably 0.03 to 20 in ppm by mass in terms of oxides (Fe is in terms of $Fe_2O_3$). The $Sb_2O_3/(Fe_2O_3+CeO_2+TiO_2)$ is preferably 0.03 or more, more preferably 0.05 or more, and still more preferably 0.07 or more, from the viewpoint of obtaining the ultraviolet ray cut performance while preventing coloring when the present glass plate is viewed from the end surface. The $Sb_2O_3/(Fe_2O_3+CeO_2+TiO_2)$ is preferably 20 or less, more preferably 10 or less, still more preferably 3 or less, and particularly preferably 1.5 or less, from the viewpoint of preventing an increase in haze.

The present glass plate preferably contains 0.01% to 2.0% of $SO_3$ in mass% in terms of oxides. When the content of $SO_3$ is 0.01% or more, reduction of Sb or Sn is prevented, so that the particle diameter of the Sb-containing particles can be reduced and the haze value can be reduced. The content of $SO_3$ is more preferably 0.2% or more, still more preferably 0.3% or more, even more preferably 0.4% or more, and particularly preferably 0.5% or more. When the content of $SO_3$ is 2.0% or less, generation of foam defects can be prevented. The content of $SO_3$ is more preferably 1.0% or less, still more preferably 0.7% or less, and particularly preferably 0.5% or less.

The present glass plate is not particularly limited in type as long as the glass contains $Sb_2O_3$, and can be produced, for example, by using the float method under a reducing atmosphere. The present glass plate may be, for example, a glass selected from the group consisting of a soda lime glass, an aluminosilicate glass, an alkali-free glass, and an alkali borosilicate glass.

The present glass plate is preferably a soda lime glass from the viewpoint of reducing a production cost. Specifically, the present glass plate preferably contains, in mass% in terms of oxides, 60% to 80% of $SiO_2$, 5% to 20% of $Na_2O$, 0% to 15% of MgO, 5% to 20% of CaO, and 0% to 10% of $Al_2O_3$. The present glass plate may further contain less than 5% of $K_2O$ in mass% in terms of oxides. The present glass plate may further contain less than 100 ppm of $Cr_2O_3$ and less than 300 ppm of CoO in ppm by mass in terms of oxides.

Hereinafter, an example of a preferred composition in the case where the present glass plate is a soda lime glass is described more specifically. Note that, in the case where the glass composition is described as % or ppm, it means mass% in terms of oxides or ppm by mass in terms of oxides unless otherwise specified.

$SiO_2$ is a main component of the soda lime glass.

The content of $SiO_2$ is preferably 60% to 80%. The content of $SiO_2$ is preferably 60% or more since weather resistance is improved. The content of $SiO_2$ is more preferably 65% or more, and still more preferably 70% or more. The content of $SiO_2$ is preferably 80% or less since devitrification is difficult. The content of $SiO_2$ is more preferably 75% or less, and still more preferably 73% or less.

$Na_2O$ is a component that promotes melting of glass raw materials.

The content of $Na_2O$ is preferably 5% to 20%. The content of $Na_2O$ is preferably 5% or more since meltability is improved. The content of $Na_2O$ is more preferably 10% or more, and still more preferably 12% or more. The content of $Na_2O$ is preferably 20% or less since the weather resistance is improved. The content of $Na_2O$ is more preferably 16% or less, and still more preferably 14% or less.

MgO is a component that promotes the melting of the glass raw materials and that improves the weather resistance.

The content of MgO is preferably 0% to 15%. When MgO is contained, the meltability and the weather resistance are improved. The content of MgO is preferably 0% or more, more preferably 1% or more, still more preferably 2% or more, and particularly preferably 4% or more. The content of MgO is preferably 15% or less since the devitrification is difficult. The content of MgO is more preferably 10% or less, and still more preferably 5% or less.

CaO is a component that promotes the melting of the glass raw materials and that improves the weather resistance.

The content of CaO is preferably 5% to 20%. The content of CaO is preferably 5% or more since the meltability and the weather resistance are improved. The content of CaO is more preferably 6% or more, and still more preferably 7% or more. The content of CaO is preferably 20% or less since the devitrification is difficult. The content of CaO is more preferably 13% or less, and still more preferably 9% or less.

$Al_2O_3$ is a component that improves the weather resistance.

The content of $Al_2O_3$ is preferably 0% to 10%. When $Al_2O_3$ is contained, the weather resistance is improved. The content of $Al_2O_3$ is preferably 0% or more, more preferably 0.1% or more, still more preferably 0.5% or more, and particularly preferably 1% or more. The content of $Al_2O_3$ is more preferably 6% or less, and still more preferably 2% or less.

$K_2O$ is a component that promotes the melting of the glass raw materials.

$K_2O$ is not essential, but may be contained in an amount of less than 5%. That is, the content of $K_2O$ may be 0% to less than 5%. When $K_2O$ is contained, the meltability is improved. In the case where $K_2O$ is contained, the content thereof is preferably 0.01% or more, and more preferably 0.5% or more. The content of $K_2O$ is preferably less than 5% since the weather resistance is improved. The content of $K_2O$ is more preferably 2% or less, and still more preferably 1% or less.

The present glass plate may contain less than 100 ppm of $Cr_2O_3$ from the viewpoint of adjusting a color tone of the glass. The content of $Cr_2O_3$ is more preferably 50 ppm or less, and still more preferably 5 ppm or less. The present glass may be substantially free of $Cr_2O_3$, but in the case where $Cr_2O_3$ is contained, the content thereof may be, for example, 0.01 ppm or more, or 1 ppm or more.

The present glass plate may contain less than 300 ppm of CoO from the viewpoint of adjusting the color tone of the glass. The content of CoO is more preferably 100 ppm or less, and still more preferably 1 ppm or less. The present glass may be substantially free of CoO, but in the case where CoO is contained, the content thereof may be, for example, 0.01 ppm or more, or 0.5 ppm or more.

Note that, examples of the soda lime glass containing Sb include a cover glass (glass for PV) used for a solar panel. After the 2030s, there is a concern that a large amount of solar panels may be discarded in Japan, and it is an important issue to ensure a recycling destination of a cover glass occupying 60% or more of the panel weight. For example, a waste cover glass of the solar panel can be collected and used as a raw material of the present glass plate. This is preferred since it leads to a reduction in amount of virgin raw materials, can reduce the melting energy and the amount of carbonate raw materials used during glass plate production, and as a result, can reduce the amount of $CO_2$ emitted in a plate glass production process.

The glass composition of the present glass plate can be measured by grinding a surface layer of 100 $\mu$m from the main surface of the present glass plate and then performing composition analysis by fluorescent X-ray analysis. Note that, as a main surface to be ground, at least a surface layer of 100 $\mu$m from an analysis surface for the fluorescent X-ray analysis may be ground. In addition, it may be difficult to quantify a component having a content of less than 1% by the fluorescent X-ray analysis, and the composition analysis may be performed by ICP emission analysis.

The present glass plate preferably has a $\beta$-OH of 0.1 $mm^{-1}$ to 0.8 $mm^{-1}$. The $\beta$-OH is an index indicating a moisture content in the glass and is represented by the following equation.

$$(\beta\text{-OH}) = (1/t)\log_{10}(T_1/T_2)$$

t = thickness (mm) of glass plate
$T_1$: light transmittance at 4,000 $cm^{-1}$
$T_2$: light transmittance at 3,550 $cm^{-1}$

When the $\beta$-OH is 0.1 $mm^{-1}$ or more, nucleation and nucleus growth of the Sb-containing particles are prevented, and thus the particle diameter of the Sb-containing particles can be reduced and the haze can be reduced. The $\beta$-OH is preferably 0.2 $mm^{-1}$ or more, more preferably 0.3 $mm^{-1}$ or more, and still more preferably 0.4 $mm^{-1}$ or more. When the $\beta$-OH is 0.8 $mm^{-1}$ or less, an appropriate amount of the Sb-containing particles are formed on the surface layer of the glass plate, and thus the glass exhibits the ultraviolet ray cut effect. The $\beta$-OH is preferably 0.7 $mm^{-1}$ or less, more preferably 0.6 $mm^{-1}$ or less, and still more preferably 0.5 $mm^{-1}$ or less.

In the case of producing the present glass plate by using the float method, the $\beta$-OH can be increased by using a method of increasing a dew point in a melting atmosphere, a method of using a raw material having a high water content, a method of bubbling a melt with water vapor, or the like.

The present glass plate preferably has a thickness of 0.5 mm to 20 mm. The thickness is preferably 0.5 mm or more, more preferably 1.5 mm or more, and still more preferably 5 mm or more, from the viewpoint of increasing strength. On the other hand, the thickness is preferably 20 mm or less, more preferably 15 mm or less, and still more preferably 10 mm or less, from the viewpoint of productivity, lightweight properties, a reduction in particle diameter of the Sb-containing particles, and a reduction in haze.

A shape of the main surface of the present glass plate is not particularly limited, and may be any shape such as a rectangle, a polygon, a circle, or an ellipse. In addition, an area of the main surface of the present glass plate is not particularly limited, and can be appropriately adjusted according to an application or the like. For example, the area of the main surface of the present glass plate may be 0.0001 $m^2$ to 100 $m^2$.

The present glass plate may be a flat glass plate or a glass plate molded or bent to include a curved surface.

The present glass plate may include a functional layer on at least one main surface of the two main surfaces. Examples of the functional layer include known functional layers such as an ultraviolet ray cut layer, an infrared ray cut layer, an antifouling layer, a water-repellent layer, a hydrophilic layer, a conductive layer made of aluminum, silver, or the like, a decorative layer made of a ceramic, a glass, or the like, and an optical functional layer such as a diffraction grating or a scattering layer, which can be appropriately selected depending on the properties and functions required of the glass plate. The present glass plate may include a plurality of functional layers. A method of forming the functional layer is not particularly limited, and a known film forming method according to the type of the functional layer may be used.

(Application)

The present glass plate can be used in various applications, and since the present glass plate has the ultraviolet ray cut performance, it is preferably used as, for example, a glass plate for building materials or a glass plate for automobiles. In addition, since the present glass plate has the ultraviolet ray cut performance and has prevented coloring derived from an ultraviolet ray absorber when viewed from the end surface, it is suitable as a glass plate in which the end surface can be exposed during use, and is particularly preferably used as a glass plate for building materials or a glass plate for automobiles in which at least a part of the end surface can be exposed during use. Examples of the glass plate for building materials or the glass plate for automobiles in which at least a part of the end surface can be exposed during use include a glass plate used for partition, exterior and interior of buildings, automobile doors, and the like. In addition, depending on the design, the application, the desired function, and the like of a building or an automobile, a glass plate for building materials or a glass plate for automobiles other than those described above may also be used in an embodiment in which at least a part of the end surface can be exposed.

[Method for Producing Glass Plate]

As described above, the present glass plate can be produced by producing a glass plate under a reducing atmosphere using a glass raw material containing Sb such that the content of $Sb_2O_3$ in the obtained glass plate is within the above range. However, in the case where the Sb-containing particles are excessively formed or in the case where the particle diameter thereof is excessively large, the haze may be rapidly deteriorated, and thus it is preferable that the conditions for producing the glass plate are appropriately adjusted.

As a method for producing a glass plate under a reducing atmosphere, a float method is preferred because of being excellent in productivity and cost. The float method is a method in which, for example, glass raw materials are adjusted to have a desired composition and melted, the molten glass is molded into a glass ribbon on a molten metal, the glass ribbon is slowly cooled, and the glass ribbon is cut into a predetermined shape to obtain a glass. In the float method, the glass is generally produced under a reducing atmosphere (for example, in an atmosphere containing $H_2$) in order to keep the molten metal in a reduced state.

That is, the method for producing the present glass plate includes, for example, melting a glass raw material and molding a molten glass into a glass ribbon on a molten metal. Note that, as the molten metal, a molten metal mainly made of molten tin is preferred from the viewpoint that the glass can be floated since a specific gravity of the molten tin is larger than that of the glass, and from the viewpoint of preventing generation of surface defects of the glass plate and damage to equipment.

In the case of producing the present glass plate by using the float method, the glass base material temperature when the molten glass starts to come into contact with the molten metal, that is, the molding start temperature is preferably 900°C to 1,250°C. When the molding start temperature is 1,250°C or lower, nucleation and nucleus growth of the Sb-containing particles are prevented in the surface layer of the glass plate, and thus the particle diameter of the Sb-containing particles can be reduced. The molding start temperature is more preferably 1,150°C or lower, and still more preferably 1,100°C or lower. When the molding start temperature is 900°C or higher, the devitrification of the glass can be prevented, and suitable ultraviolet ray cut performance in the surface layer of the glass plate can be obtained. The molding start temperature is more preferably 1,000°C or higher, and still more preferably 1,050°C or higher.

The glass base material temperature when the molten glass is separated from the molten metal, that is, the molding end temperature is preferably 500°C to 750°C. When the molding end temperature is 750°C or lower, suitable ultraviolet ray cut performance in the surface layer of the glass plate can be obtained. The molding end temperature is more preferably 660°C or lower, and still more preferably 640°C or lower. When the molding end temperature is 500°C or higher, the particle diameter of the Sb-containing particles can be reduced. The molding end temperature is more preferably 580°C or higher, and still more preferably 620°C or higher.

The time during which the molten glass is in contact with the molten metal, that is, the molding time is preferably 3 minutes to 20 minutes. When the molding time is 20 minutes or shorter, the particle diameter of the Sb-containing particles can be reduced, and deterioration of the haze value can be prevented. The molding time is more preferably 10 minutes or shorter, and still more preferably 8 minutes or shorter. When the molding time is 3 minutes or longer, suitable ultraviolet ray cut performance in the surface layer of the glass plate can be obtained. The molding time is more preferably 5 minutes or longer, and still more preferably 6 minutes or longer.

**In** the case of producing the present glass plate by using the float method, the concentration of $H_2$ in the atmosphere in the molten metal tank is preferably 0.5 vol% to 15 vol%. When the concentration of $H_2$ is 15 vol% or less, nucleation and nucleus growth of the Sb-containing particles are prevented in the surface layer of the glass plate, and thus the particle diameter of the Sb-containing particles can be reduced. The concentration of $H_2$ is more preferably 7 vol% or less, and still more preferably 5 vol% or less. When the concentration of $H_2$ is 0.5 vol% or more, tin defects on the glass surface can be prevented. The concentration of $H_2$ is more preferably 1 vol% or more, and still more preferably 3 vol% or more.

**In** the case of producing the present glass plate by using the float method, the dew point in the atmosphere in the molten metal tank is preferably -50°C to 20°C. When the dew point is -50°C or higher, nucleation and nucleus growth of the Sb-containing particles are prevented in the surface layer of the glass plate, and thus the particle diameter of the Sb-containing particles can be reduced. **In** order to reduce the particle diameter of the Sb-containing particles and to prevent deterioration of the haze value, the dew point is more preferably -30°C or higher, still more preferably -20°C or higher, and particularly preferably **-10°C** or higher. When the dew point is 20°C or lower, tin defects of the glass can be prevented. The dew point is preferably 10°C or lower, more preferably 0°C or lower, and particularly preferably -5°C or lower.

More preferably, the molding start temperature is 900°C to 1,250°C, the molding end temperature is 500°C to 750°C, the molding time is 3 minutes to 20 minutes, the concentration of $H_2$ in the atmosphere in the molten metal tank is 0.5 vol% to 15 vol%, and the dew point is -50°C to 20°C. Still more preferably, the molding start temperature is 1,000°C to 1,150°C, the molding end temperature is 580°C to 660°C, the molding time is 5 minutes to 10 minutes, the concentration of $H_2$ in the atmosphere in the molten metal tank is 1 vol% to 7 vol%, and the dew point is -30°C to 10°C.

**In** order to reduce the particle diameter of the Sb-containing particles and to reduce the number of the Sb-containing particles in the surface layer of the glass ribbon, the glass ribbon formed on the molten metal may be held at a constant temperature and then slowly cooled, or may be heated during slow cooling. When a slow cooling rate for the glass ribbon is decreased, the particle diameter of the Sb-containing particles can be reduced and the number of the Sb-containing particles can be reduced in the surface layer of the glass ribbon.

The particle diameter and the number of the Sb-containing particles can be controlled by subjecting, to a heat treatment, the glass plate containing the Sb-containing particles produced by the method exemplified above. The particle diameter and the number of the Sb-containing particles may be controlled by physical strengthening or a heat treatment in a heat bending step for the glass plate. When a heat treatment temperature is 400°C or higher, the particle diameter and the number of the Sb-containing particles can be reduced in the surface layer of the glass plate. The heat treatment temperature may be 500°C or higher, 600°C or higher, or 650°C or higher. The heat treatment temperature may be 800°C or lower, 750°C or lower, or 700°C or lower in order to prevent deformation of the glass plate. A heat treatment time may be 1 minute or longer, 10 minutes or longer, or 1 hour or longer. In addition, it may be 100 hours or shorter, 20 hours or shorter, or 5 hours or shorter. An atmosphere during the heat treatment may be an air atmosphere, may be an oxygen atmosphere in order to efficiently control the particle diameter and the number of the Sb-containing particles, or may be a $SO_3$ atmosphere.

In the glass plate containing the Sb-containing particles, a part of the surface layer of the glass plate containing the Sb-containing particles may be removed by etching or polishing for the purpose of appropriately controlling the ultraviolet ray cut performance in the surface layer.

As exemplified above, by producing the glass plate while appropriately controlling the conditions for forming the Sb-containing particles, it is possible to produce the present glass plate having suitable ultraviolet ray cut performance in the surface layer while preventing an increase in haze.

Examples

Hereinafter, the present invention is described in detail with reference to Examples, but the present invention is not limited thereto. Examples 1 to 10 are Inventive Examples, and Examples 11 to 16 are Comparative Examples.

(Example 1)

Glass raw materials were blended so as to have the glass composition represented in mass% or ppm by mass in terms of oxides in Table 1, followed by melting at 1,550°C, and a glass plate was produced by a float method using molten tin. In the case of molding the molten glass on the molten tin, the molding start temperature was 1,000°C, the molding end temperature was 625°C, the molding time was 11 minutes, the concentration of $H_2$ in the atmosphere in the molten metal tank was 10 vol%, and the dew point was -30°C.

(Examples 2 to 16)

Glass plates were produced in the same manner as in Example 1 except that glass raw materials were prepared so as to have the glass composition represented in mass% or ppm by mass in terms of oxides in Tables 1 and 2, and the production conditions in the float method were changed as shown in Tables 1 and 2. Note that, the glass plate obtained in each example was subjected to fluorescent X-ray analysis. It has been found that the content of each component obtained from the fluorescent X-ray analysis for $SiO_2$, $Al_2O_3$, CaO, MgO, $Na_2O$, $K_2O$, and $SO_3$ is as shown in Tables 1 and 2. Regarding the glass composition, "-" in the tables means that the component is not intentionally added, and the content thereof is considered to be less than 10 ppm.

(Evaluation)

The obtained glass plates in Examples 1 to 16 were evaluated by using the following methods.

(Thickness)

The thickness was measured using a micrometer.

(T and U)

The T (%) at each wavelength of the glass plate in each example was measured using a spectrophotometer (UH4150 manufactured by Hitachi High-Tech Corporation). The measurement was performed in accordance with JIS R 3106:2019.
In addition, the U (%) at each wavelength was measured by the same method as the T for the glass plate in each example in which a surface layer of 10 $\mu$m was removed from each of the two main surfaces by immersing and leaving the glass plate in a 1 wt% hydrofluoric acid solution and performing etching.
Note that, in the wavelength range of 315 nm to 400 nm, the U-T is obtained for the T and the U at each wavelength measured at a wavelength interval of 1 nm, the maximum value thereof is defined as $(U-T)_{UV}$, and the T at that wavelength is defined as $T_{UV}$.

($\beta$-OH)

For the glass plate in each example, the transmittance $T_1$ at 4,000 cm$^{-1}$ and the transmittance $T_2$ at 3,550 cm$^{-1}$ were measured using a Fourier transform infrared spectrophotometer (Nicolet iS10, manufactured by Thermo Fisher Scientific Inc.), and the $\beta$-OH of the glass plate in each example was obtained according to the following equation using the value of the thickness t (mm) measured by the above method.

$$(\beta\text{-OH}) = (1/t)\log_{10}(T_1/T_2)$$

(Content of $SnO_2$)

The concentration of Sn in terms of $SnO_2$ from a measurement target surface to a depth of 30 $\mu$m in a cross section polished to be perpendicular to the main surface was measured by a wavelength dispersive X-ray detector (WDX) mounted on an electron probe microanalyzer (EPMA, JXA-8500F, manufactured by JEOL Ltd.). As measurement conditions, an acceleration voltage was set to 15 kV, a sample current was set to 2.5 × 10$^{-7}$ A, a scan speed was set to 6 $\mu$m/min, a beam aperture was set to 1 $\mu$m, and a step interval was set to 1 $\mu$m. In addition, a standard glass sample SRM 1831 and an oxide standard $SnO_2$ manufactured by NIST were used as standard samples. The measurement was performed on both main surfaces of each example.
In addition, the maximum value $SnO_{2(max\,at\,0-5)}$ of the content of $SnO_2$ from the surface of the bottom surface to a depth of 5 $\mu$m and the maximal value $SnO_{2(maximal\,at\,5-30)}$ of the content of $SnO_2$ at a depth of 5 $\mu$m to 30 $\mu$m were determined. In addition, the maximum value $SnO_{2\,Tmax}$ of the content of $SnO_2$ at a depth of 30 $\mu$m from the surface of the top surface was determined.

(Observation of Sb-containing Particles)

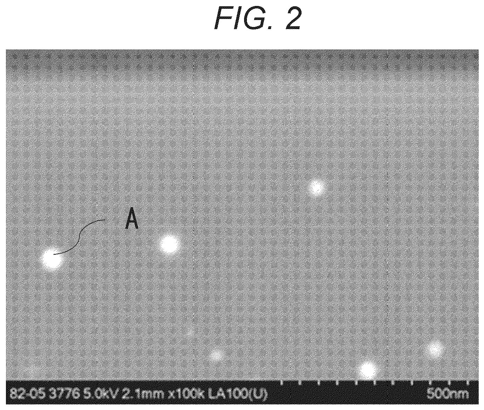

A region with 15 $\mu$m in a direction parallel to the bottom surface and a depth of 0 $\mu$m to 10 $\mu$m in a cross section in the vicinity of the bottom surface subjected to CP processing by an ion milling method so as to be perpendicular to the bottom surface was observed using a SEM (SU8230 manufactured by Hitachi High-Tech Corporation) at a magnification of 50,000 times or 100,000 times, an acceleration voltage of 5 kV, and a WD of 4 mm to check the presence or absence of particles. In the case where the particles were observed, the diameter of the particle having the largest size in the observation range was determined. Note that, whether the particles contained Sb was checked using an EDX detector (QUANTAX XFlash FQ manufactured by Bruker Corporation) attached to the SEM at an acceleration voltage of 7 kV and a WD of 7 mm, and whether the particles contained Sn was also checked. As an example of the observation image, FIG. 2 shows an observation image obtained by observing the presence or absence of particles under the above conditions for the glass plate in Example 5. In the observation image in FIG. 2, a plurality of particles A can be observed.

(Haze)

The haze of the glass plate in each example was measured under a D65 light source in accordance with JIS K 7136:2000 using a haze meter (HZ-V3 manufactured by Suga Test Instruments Co., Ltd.).

Table 1

| | Unit | Ex. 1 | Ex. 2 | Ex. 3 | Ex. 4 | Ex. 5 | Ex. 6 | Ex. 7 | Ex. 8 |
|---|---|---|---|---|---|---|---|---|---|
| $SiO_2$ | | 72.8 | 72.8 | 72.8 | 72.7 | 72.7 | 70.5 | 72.7 | 68.4 |
| $Al_2O_3$ | | 1.3 | 1.3 | 1.3 | 1.3 | 1.3 | 1.6 | 1.3 | 5.0 |
| CaO | | 8.4 | 8.4 | 8.4 | 8.4 | 8.4 | 8.4 | 8.4 | 7.2 |
| MgO | wt% | 4.2 | 4.2 | 4.2 | 4.2 | 4.2 | 4.7 | 4.2 | 4.1 |
| $Na_2O$ | | 13.0 | 13.0 | 13.0 | 13.0 | 13.0 | 13.4 | 13.0 | 14.7 |
| $K_2O$ | | 0.1 | 0.1 | 0.1 | 0.1 | 0.1 | 0.8 | 0.1 | 0.2 |
| $SO_3$ | | 0.2 | 0.2 | 0.2 | 0.2 | 0.2 | 0.1 | 0.2 | 0.2 |
| $Fe_2O_3$ | | 840 | 840 | 840 | 840 | 150 | 4800 | 840 | 850 |
| $CeO_2$ | | - | - | - | - | - | - | - | - |
| NiO | | - | - | - | - | - | - | - | - |
| $Cr_2O_3$ | ppm by wt | - | - | - | - | - | - | - | - |
| CoO | | - | - | - | - | - | - | - | - |
| $TiO_2$ | | 200 | 200 | 200 | 200 | 200 | 250 | 200 | 200 |
| $Sb_2O_3$ | | 100 | 200 | 400 | 800 | 1900 | 400 | 800 | 800 |
| Total | | 100.0 | 100.0 | 100.0 | 100.0 | 100.0 | 100.0 | 100.0 | 100.0 |
| Molding start temperature | °C | 1000 | 1000 | 1000 | 1000 | 1000 | 1000 | 1150 | 970 |
| Molding end temperature | °C | 625 | 625 | 625 | 625 | 625 | 625 | 650 | 650 |
| Molding time | min | 11 | 11 | 11 | 11 | 11 | 11 | 10 | 10 |
| Concentration of $H_2$ | % | 10 | 10 | 10 | 10 | 10 | 1 | 10 | 5 |
| Dew point | °C | -30 | -30 | -30 | -30 | -30 | -30 | -30 | 0 |
| Thickness | mm | 8 | 8 | 8 | 8 | 8 | 8 | 8 | 0.7 |
| Tuv | | 74.15 | 69.90 | 66.15 | 54.29 | 36.05 | 59.42 | 50.11 | 65.63 |
| T380 | | 78.74 | 76.35 | 71.82 | 62.21 | 43.67 | 36.68 | 39.48 | 87.79 |
| T480 | % | 88.55 | 87.86 | 85.94 | 81.75 | 72.16 | 75.30 | 74.03 | 90.28 |
| T580 | | 88.09 | 88.16 | 87.03 | 84.71 | 79.29 | 71.65 | 74.72 | 90.69 |
| $T_{680}$ | | 83.18 | 84.12 | 83.41 | 81.94 | 77.90 | 49.31 | 60.82 | 90.54 |

(continued)

|  | Unit | Ex. 1 | Ex. 2 | Ex. 3 | Ex. 4 | Ex. 5 | Ex. 6 | Ex. 7 | Ex. 8 |
|---|---|---|---|---|---|---|---|---|---|
| $(U\text{-}T)_{UV}$ | % | 2.39 | 5.34 | 10.77 | 21.85 | 44.23 | 6.02 | 21.31 | 8.31 |
| $(U\text{-}T)_{380}$ | | 1.95 | 4.28 | 8.52 | 17.75 | 37.03 | 4.72 | 17.61 | 1.82 |
| $(U\text{-}T)_{480}$ | | 0.92 | 1.95 | 3.79 | 7.81 | 17.50 | 3.31 | 8.89 | 0.61 |
| $(U\text{-}T)_{580}$ | | 0.59 | 1.19 | 2.20 | 4.44 | 9.75 | 1.63 | 4.67 | 0.28 |
| $(U\text{-}T)_{680}$ | | 0.44 | 0.87 | 1.46 | 2.91 | 6.53 | 0.53 | 2.85 | 0.02 |
| $SnO_{2(max\ at\ 0\text{-}5)}$ | wt% | 1.1 | 1.1 | 1.1 | 1.1 | 1.1 | 1.8 | 1.0 | 1.5 |
| $SnO_{2(maximal\ at\ 5\text{-}30)}$ | wt% | 0.7 | 0.7 | 0.7 | 0.7 | 0.7 | 0.9 | 0.8 | 0.8 |
| $SnO_{2\ Tmax}$ | wt% | 0.0 | 0.0 | 0.0 | 0.0 | 0.0 | 0.0 | 0.0 | 0.0 |
| Presence or absence of Sb-containing particles | | present | present | present | present | present | present | present | present |
| Maximum diameter of Sb-containing particles | nm | 40 | 40 | 40 | 45 | 55 | 40 | 70 | 15 |
| Haze | % | 0.05 | 0.05 | 0.12 | 0.25 | 0.33 | 0.13 | 1.54 | 0.05 |
| β-OH | /mm | 0.2 | 0.3 | 0.3 | 0.3 | 0.4 | 0.3 | 0.4 | 0.5 |

Table 2

|  | Unit | Ex. 9 | Ex. 10 | Ex. 11 | Ex. 12 | Ex. 13 | Ex. 14 | Ex. 15 | Ex. 16 |
|---|---|---|---|---|---|---|---|---|---|
| $SiO_2$ | wt% | 72.8 | 72.3 | 69.7 | 69.9 | 68.4 | 72.5 | 72.7 | 72.8 |
| $Al_2O_3$ | | 1.3 | 1.3 | 1.8 | 1.5 | 1.5 | 1.3 | 1.3 | 1.3 |
| CaO | | 8.4 | 8.4 | 8.5 | 7.8 | 7.9 | 8.4 | 8.4 | 8.4 |
| MgO | | 4.2 | 4.2 | 4.5 | 4.5 | 4.1 | 4.2 | 4.2 | 4.2 |
| $Na_2O$ | | 13.0 | 13.0 | 13.2 | 13.4 | 13.3 | 13.0 | 13.0 | 13.0 |
| $K_2O$ | | 0.1 | 0.1 | 0.8 | 0.7 | 0.7 | 0.1 | 0.1 | 0.1 |
| $SO_3$ | | 0.2 | 0.4 | 0.2 | 0.2 | 0.1 | 0.2 | 0.2 | 0.2 |
| $Fe_2O_3$ | ppm by wt | 840 | 840 | 11000 | 8600 | 14000 | 840 | 150 | 840 |
| $CeO_2$ | | - | - | - | 4400 | - | - | - | - |
| NiO | | - | - | - | - | - | - | - | - |
| $Cr_2O_3$ | | - | - | 60 | - | 70 | - | - | - |
| CoO | | - | - | 250 | - | 260 | - | - | - |
| $TiO_2$ | | 200 | 200 | 1000 | 6500 | 24000 | 200 | 200 | 200 |
| $Sb_2O_3$ | | 400 | 800 | - | - | - | 3000 | 1900 | 0 |
| Total | | 100.0 | 99.8 | 100.0 | 100.0 | 100.0 | 100.0 | 100.0 | 100.0 |
| Molding start temperature | °C | 1050 | 1000 | 1000 | 1000 | 1000 | 1000 | 1170 | 1000 |
| Molding end temperature | °C | 625 | 625 | 625 | 625 | 625 | 625 | 625 | 625 |
| Molding time | min | 11 | 11 | 11 | 11 | 11 | 11 | 12 | 11 |
| Concentration of $H_2$ | % | 15 | 10 | 10 | 10 | 10 | 10 | 20 | 10 |
| Dew point | °C | -30 | -30 | -30 | -30 | -30 | -30 | -30 | -30 |

(continued)

| | Unit | Ex. 9 | Ex. 10 | Ex. 11 | Ex. 12 | Ex. 13 | Ex. 14 | Ex. 15 | Ex. 16 |
|---|---|---|---|---|---|---|---|---|---|
| Thickness | mm | 16 | 8 | 3 | 3 | 3 | 8 | 8 | 8 |
| Tuv | | 50.68 | 59.51 | 29.35 | 8.54 | 54.51 | 21.74 | 34.05 | 32.67 |
| T380 | | 55.42 | 66.14 | 17.36 | 2.89 | 34.00 | 29.63 | 38.02 | 81.47 |
| T480 | % | 80.00 | 83.64 | 24.58 | 15.68 | 73.83 | 62.91 | 65.26 | 89.67 |
| T580 | | 82.04 | 85.81 | 25.53 | 19.02 | 76.24 | 73.69 | 74.73 | 88.72 |
| $T_{680}$ | | 75.00 | 82.75 | 33.31 | 22.56 | 61.56 | 74.04 | 74.99 | 83.20 |
| $(U-T)_{UV}$ | | 20.80 | 17.47 | 1.05 | 0.56 | 1.33 | 58.54 | 47.29 | 0.08 |
| $(U-T)_{380}$ | | 16.48 | 13.97 | 0.69 | 0.22 | 0.90 | 51.07 | 42.69 | 0.02 |
| $(U-T)_{480}$ | % | 7.75 | 6.08 | 0.58 | 0.54 | 0.81 | 26.75 | 24.40 | 0.01 |
| $(U-T)_{580}$ | | 4.19 | 3.51 | 0.41 | 0.38 | 0.36 | 15.35 | 14.31 | 0.01 |
| $(U-T)_{680}$ | | 2.28 | 2.32 | 0.57 | 0.53 | 0.57 | 10.39 | 9.45 | 0.02 |
| $SnO_{2(max\ at\ 0-5)}$ | wt% | 1.2 | 1.1 | 1.1 | 1.1 | 1.1 | 1.1 | 1.1 | 1.1 |
| $SnO_{2(maximal\ at\ 5-30)}$ | wt% | 0.9 | 0.7 | 0.7 | 0.7 | 0.7 | 0.7 | 1.1 | 0.7 |
| $SnO_{2\ Tmax}$ | wt% | 0.0 | 0.0 | 0.0 | 0.0 | 0.0 | 0.0 | 0.0 | 0.0 |
| Presence or absence of Sb-containing particles | | present | present | absent | absent | absent | present | present | absent |
| Maximum diameter of Sb-containing particles | nm | 50 | 45 | - | - | - | 60 | 110 | - |
| Haze | % | 1.09 | 0.26 | 0.06 | 0.05 | 0.06 | 2.38 | 5.22 | 0.04 |
| β-OH | /mm | 0.1 | 0.3 | 0.3 | 0.3 | 0.2 | 0.2 | 0.3 | 0.2 |

As shown in Tables 1 and 2, it has been found that, in Examples 1 to 10 as Inventive Examples, since the $(U-T)_{380}$ is 1.3% or more, the surface layer of the main surface of the glass plate locally has the ultraviolet ray cut performance. Accordingly, the glass plates in Examples 1 to 10 also have prevented coloring when viewed from the end surface. The glass plates in Examples 1 to 10 have a relatively small haze value and have excellent transparency and quality. In the glass plates in Examples 11 to 13 and 16, since $Sb_2O_3$ is not contained, the values of the $(U-T)_{380}$ and the $(U-T)_{UV}$ are relatively small. In addition, in the glass plate in Example 14 in which the content of $Sb_2O_3$ is too large and the glass plate in Example 15 in which the particle diameter of the Sb-containing particles is too large, the haze value is large and the quality is poor.

Table 3 shows properties of a glass plate obtained by subjecting, to a heat treatment, the glass plate in Example 4 in an air atmosphere at 600°C for 20 hours.

Table 3

| | Unit | Subject Ex. 4 to heat treatment at 600°C for 20 h |
|---|---|---|
| Tuv | | 67.10 |
| T380 | | 72.38 |
| $T_{480}$ | % | 86.31 |
| T580 | | 87.26 |
| $T_{680}$ | | 83.52 |

(continued)

| | Unit | Subject Ex. 4 to heat treatment at 600°C for 20 h |
|---|---|---|
| $(U\text{-}T)_{UV}$ | % | 9.62 |
| $(U\text{-}T)_{380}$ | | 7.65 |
| $(U\text{-}T)_{480}$ | | 3.37 |
| $(U\text{-}T)_{580}$ | | 1.95 |
| $(U\text{-}T)_{680}$ | | 1.31 |
| $SnO_{2(max\ at\ 0\text{-}5)}$ | wt% | 1.2 |
| $SnO_{2(maximal\ at\ 5\text{-}30)}$ | wt% | 0.7 |
| $SnO_{2\ Tmax}$ | wt% | 0 |
| Presence or absence of Sb-containing particles | | present |
| Maximum diameter of Sb-containing particles | nm | 40 |
| Haze | % | 0.07 |
| β-OH | /mm | 0.4 |

As shown in Table 3, the maximum diameter of the Sb-containing particles and the haze can be reduced by the heat treatment. Accordingly, the ultraviolet ray cut performance of the surface layer can be appropriately controlled.

As described above, the following matters are disclosed in the present description.

1. A glass plate having two main surfaces, including 50 ppm to 2,500 ppm of $Sb_2O_3$ in ppm by mass in terms of oxides, in which

when a transmittance in a thickness direction of the glass plate is defined as T (%) in percentage, a transmittance in the thickness direction after removing a surface layer of 10 μm from each of the two main surfaces of the glass plate is defined as U (%) in percentage, and U-T at a wavelength of 380 nm is defined as $(U\text{-}T)_{380}$, the $(U\text{-}T)_{380}$ is 1.3% or more, and
a haze is 2.0% or less.

2. The glass plate according to the above 1, including 80 ppm to 20,000 ppm of $Fe_2O_3$ in ppm by mass in terms of oxides.

3. The glass plate according to the above 1 or 2, in which when U-T at a wavelength of 480 nm is defined as $(U\text{-}T)_{480}$, U-T at a wavelength of 580 nm is defined as $(U\text{-}T)_{580}$, and U-T at a wavelength of 680 nm is defined as $(U\text{-}T)_{680}$, the $(U\text{-}T)_{380}$, the $(U\text{-}T)_{480}$, the $(U\text{-}T)_{580}$, and the $(U\text{-}T)_{680}$ satisfy the following formula:

$$(U\text{-}T)_{380} > (U\text{-}T)_{480} > (U\text{-}T)_{580} > (U\text{-}T)_{680}.$$

4. The glass plate according to any one of the above 1 to 3, in which in one main surface of the two main surfaces, a maximum value of a content of $SnO_2$ from the surface to a depth of 30 μm is 0.5% or more, and
in the other main surface, a maximum value of the content of $SnO_2$ from the surface to a depth of 30 μm is 0.4% or less.

5. The glass plate according to the above 4, in which in the one main surface, a maximum value of the content of $SnO_2$ from the surface to a depth of 5 μm is larger than a maximal value of the content of $SnO_2$ at a depth of 5 μm to 30 μm.

6. The glass plate according to the above 4 or 5, having Sb-containing particles in a region from the one main surface to a depth of 10 μm, in which the Sb-containing particles have a maximum diameter of 5 nm to 100 nm.

7. The glass plate according to the above 6, in which the Sb-containing particles contain Sn.

8. The glass plate according to any one of the above 1 to 7, having a thickness of 0.5 mm to 20 mm.

9. The glass plate according to any one of the above 1 to 8, including, in mass% in terms of oxides, 60% to 80% of $SiO_2$, 5% to 20% of $Na_2O$, 0% to 15% of MgO, 5% to 20% of CaO, and 0% to 10% of $Al_2O_3$.

10. The glass plate according to any one of the above 1 to 9, including 0 ppm to 10,000 ppm of $CeO_2$ in ppm by mass in terms of oxides.

11. The glass plate according to any one of the above 1 to 10, including 0 ppm to 30,000 ppm of $TiO_2$ in ppm by mass in terms of oxides.

12. The glass plate according to any one of the above 1 to 11, including 0.01% to 2.0% of $SO_3$ in mass% in terms of oxides.

13. The glass plate according to any one of the above 1 to 12, in which a $\beta$-OH is 0.1 mm$^{-1}$ to 0.8 mm$^{-1}$.

14. The glass plate according to any one of the above 1 to 13, further having a functional layer on at least one main surface of the two main surfaces.

15. The glass plate according to any one of the above 1 to 14, which is a glass plate for building materials or a glass plate for automobiles.

Although the present invention has been described in detail with reference to specific embodiments, it is apparent to those skilled in the art that various changes and modifications can be made without departing from the spirit and scope of the present invention. Note that, the present application is based on a Japanese patent application (Japanese Patent Application No. 2022-193022) filed on December 1, 2022, the entire contents of which are incorporated herein by reference. In addition, all references cited here are entirely incorporated.

**Claims**

1. A glass plate having two main surfaces, comprising 50 ppm to 2,500 ppm of $Sb_2O_3$ in ppm by mass in terms of oxides, wherein

   when a transmittance in a thickness direction of the glass plate is defined as T (%) in percentage, a transmittance in the thickness direction after removing a surface layer of 10 $\mu$m from each of the two main surfaces of the glass plate is defined as U (%) in percentage, and U-T at a wavelength of 380 nm is defined as $(U\text{-}T)_{380}$, the $(U\text{-}T)_{380}$ is 1.3% or more, and
   a haze is 2.0% or less.

2. The glass plate according to claim 1, comprising 80 ppm to 20,000 ppm of $Fe_2O_3$ in ppm by mass in terms of oxides.

3. The glass plate according to claim 1 or 2, wherein when U-T at a wavelength of 480 nm is defined as $(U\text{-}T)_{480}$, U-T at a wavelength of 580 nm is defined as $(U\text{-}T)_{580}$, and U-T at a wavelength of 680 nm is defined as $(U\text{-}T)_{680}$, the $(U\text{-}T)_{380}$, the $(U\text{-}T)_{480}$, the $(U\text{-}T)_{580}$, and the $(U\text{-}T)_{680}$ satisfy the following formula:

$$(U\text{-}T)_{380} > (U\text{-}T)_{480} > (U\text{-}T)_{580} > (U\text{-}T)_{680}.$$

4. The glass plate according to claim 1 or 2, wherein, in one main surface of the two main surfaces, a maximum value of a content of $SnO_2$ from the surface to a depth of 30 $\mu$m is 0.5% or more, and
   in the other main surface, a maximum value of the content of $SnO_2$ from the surface to a depth of 30 $\mu$m is 0.4% or less.

5. The glass plate according to claim 4, wherein in the one main surface, a maximum value of the content of $SnO_2$ from the surface to a depth of 5 $\mu$m is larger than a maximal value of the content of $SnO_2$ at a depth of 5 $\mu$m to 30 $\mu$m.

6. The glass plate according to claim 4, having Sb-containing particles in a region from the one main surface to a depth of 10 $\mu$m, wherein the Sb-containing particles have a maximum diameter of 5 nm to 100 nm.

7. The glass plate according to claim 6, wherein the Sb-containing particles contain Sn.

8. The glass plate according to claim 1 or 2, having a thickness of 0.5 mm to 20 mm.

9. The glass plate according to claim 1 or 2, comprising, in mass% in terms of oxides, 60% to 80% of $SiO_2$, 5% to 20% of $Na_2O$, 0% to 15% of MgO, 5% to 20% of CaO, and 0% to 10% of $Al_2O_3$.

10. The glass plate according to claim 1 or 2, comprising 0 ppm to 10,000 ppm of $CeO_2$ in ppm by mass in terms of oxides.

11. The glass plate according to claim 1 or 2, comprising 0 ppm to 30,000 ppm of $TiO_2$ in ppm by mass in terms of oxides.

12. The glass plate according to claim 1 or 2, comprising 0.01% to 2.0% of $SO_3$ in mass% in terms of oxides.

**13.** The glass plate according to claim 1 or 2, wherein a $\beta$-OH is 0.1 mm$^{-1}$ to 0.8 mm$^{-1}$.

**14.** The glass plate according to claim 1 or 2, further having a functional layer on at least one main surface of the two main surfaces.

**15.** The glass plate according to claim 1 or 2, which is a glass plate for building materials or a glass plate for automobiles.

FIG. 1

## FIG. 2

## INTERNATIONAL SEARCH REPORT

| International application No. |
|---|
| **PCT/JP2023/042272** |

**A. CLASSIFICATION OF SUBJECT MATTER**

*C03C 4/08*(2006.01)i; *B60J 1/00*(2006.01)i; *C03C 3/078*(2006.01)i; *C03C 3/087*(2006.01)i; *C03B 18/02*(2006.01)n
FI:   C03C4/08; B60J1/00 G; C03C3/078; C03C3/087; C03B18/02

According to International Patent Classification (IPC) or to both national classification and IPC

**B. FIELDS SEARCHED**

Minimum documentation searched (classification system followed by classification symbols)

C03C1/00-14/00; C03B18/00-18/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-305711 A (NIPPON ELECTRIC GLASS CO LTD) 18 December 2008 (2008-12-18) claims, paragraphs [0001], [0018]-[0038], examples | 1, 3-11, 13-14 |
| A | | 2, 12, 15 |
| A | WO 2017/022508 A1 (ASAHI GLASS CO LTD) 09 February 2017 (2017-02-09) claims, paragraphs [0034]-[0036], [0046]-[0047] | 1-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/042272**

| Patent document cited in search report | Publication date (day/month/year) | Patent family member(s) | Publication date (day/month/year) |
|---|---|---|---|
| JP 2008-305711 A | 18 December 2008 | (Family: none) | |
| WO 2017/022508 A1 | 09 February 2017 | JP 2018-150180 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348143 A

- JP 2022193022 A